# EUROPEAN PATENT SPECIFICATION

(11) **EP 3 762 178 B1**
(45) Date of publication and mention of the grant of the patent: **30.08.2023**
(21) Application number: 19707035.2
(22) Date of filing: 04.03.2019
(51) Int. Cl.: B23Q 3/08, B23B 31/20, B23Q 3/12, B25B 5/06

(54) **WORKPIECE GRIPPING DEVICE FOR MACHINE TOOLS AND MACHINING CENTERS**
WERKSTÜCKGREIFVORRICHTUNG FÜR WERKZEUGMASCHINEN UND BEARBEITUNGSZENTREN
DISPOSITIF DE PRÉHENSION DE PIÈCE POUR MACHINES-OUTILS ET CENTRES D'USINAGE

(30) Priority: 05.03.2018 IT 201800003257
(43) Date of publication of application: 13.01.2021
(73) Proprietor: Bronzino, Walter, 10055 Condove (IT); Bronzino, Pier Mauro, 10040 Caprie (IT)
(72) Inventor: Bronzino, Walter, 10055 Condove (IT); Bronzino, Pier Mauro, 10040 Caprie (IT)
(74) Representative: Modiano, Micaela Nadia
(86) International application number: PCT/EP2019/055308
(87) International publication number: WO 2019/170599

(56) References cited:
- EP-A1- 2 221 142
- DE-A1- 3 318 432

## Description

The present invention relates to a workpiece gripping device for machine tools and machining centers.

As is known, a workpiece to be machined in a generic machining center can be mounted on a workpiece gripping device provided with one or more grip elements (claws or inserts), which are biased to close by preloaded springs and are actuated to open by a pneumatic cylinder.

Therefore, the closing force usually is determined by the stiffness of the springs and by the preloading applied thereto.

For some applications, it is already known to generate an additional gripping force by actuating the pneumatic cylinder in the closing direction of the claws or inserts.

Such a workpiece gripping device is known from patent document EP 2 221 142 A1 on which the preamble of appended claim1 is based.

This solution is very effective, since it allows to increase considerably the gripping force, for example, from 6-7 kN to 22-24 kN, but it has the drawback of requiring a continuous supply of pressurized air. As is known, this requirement is incompatible with many machining processes, as well as with the steps for transport and storage of the workpieces when usually a pressurized air source is not available.

A further drawback of the workpiece gripping devices such the ones mentioned above is that without a continuous supply of pressurized air they cannot be kept in the open configuration for loading the workpieces.

Therefore, the aim of the present invention is to provide a workpiece gripping device for machine tools and machining centers which, without requiring a continuous supply of pressurized air, allows to apply an additional gripping force by pneumatic means, as well as to keep the workpiece gripping device in an open configuration for loading the workpieces.

Within this aim an object of the invention is to provide a solution that can be implemented easily in already commercially available workpiece gripping devices.

This aim and this and other objects that will become better apparent from the following description are achieved by a workpiece gripping device having the characteristics described in claim 1, while the dependent claims define other advantageous, albeit secondary, characteristics of the invention.

The invention will be now described in greater detail, with reference to some of its preferred but not exclusive embodiments, illustrated by way of non-limiting example in the accompanying drawings, wherein:
Figure 1 is a plan view of a workpiece gripping device according to the invention;
Figure 2 is a sectional view of Figure 1, taken along the line II-II;
Figure 3 is a sectional view of Figure 1, taken along the line III-III;
Figures 4-7 are enlarged-scale and sectional views, taken along the line IV-IV, of a detail of Figure 3 in four subsequent operating configurations;
Figure 8 is a plan view of a workpiece gripping device in a first alternative embodiment of the invention;
Figure 9 is a sectional view of Figure 8, taken along the line IX-IX;
Figure 10 is a perspective view of a workpiece gripping device in a second alternative embodiment of the invention;
Figure 11 is an axial sectional view of Figure 10;
Figure 12 is a sectional view of Figure 11, taken along the line XII-XII;
Figure 13 is a sectional view of Figure 12, taken along the line XIII-XIII;
Figure 14 is an enlarged-scale view of a detail of Figure 13;
Figure 15 is a plan view of a workpiece gripping device in a third alternative embodiment of the invention;
Figure 16 is a sectional view of Figure 15, taken along the line XVI-XVI.

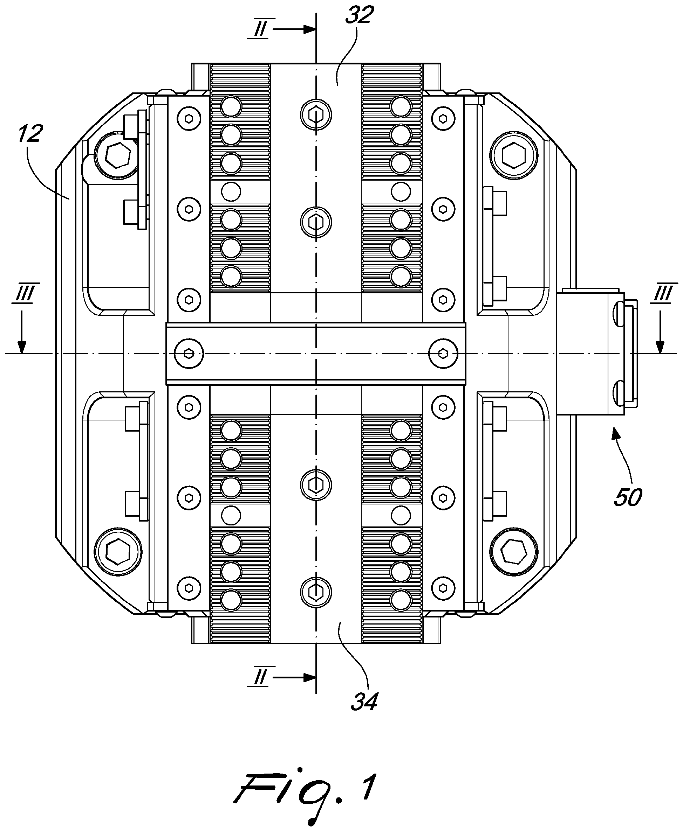

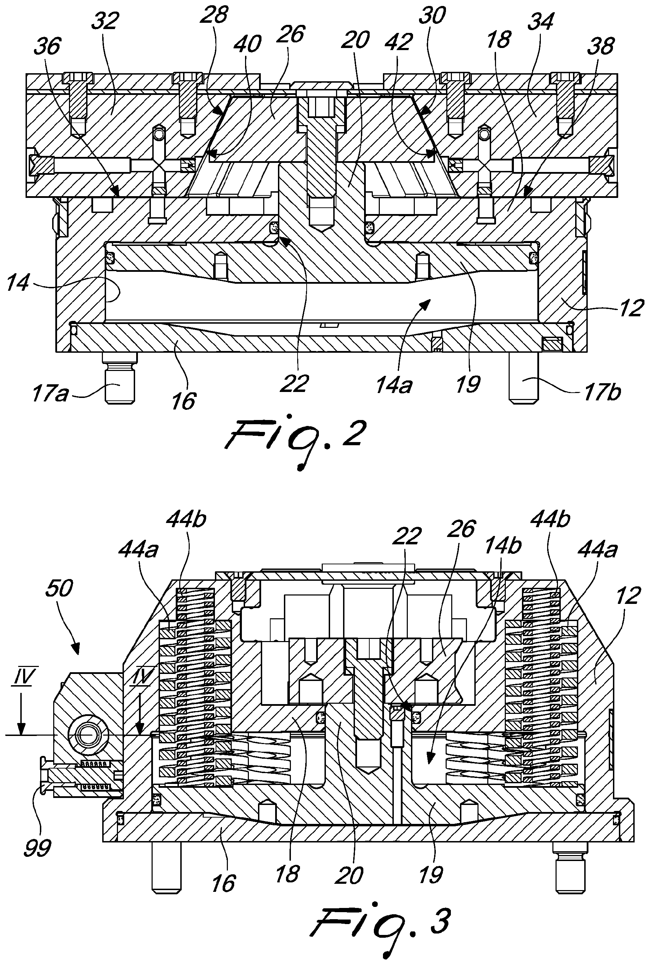

With initial reference to Figures 1-3, a workpiece gripping device 10 for machine tools and machining centers comprises a body 12 in which an airtight cylindrical chamber 14 is defined.

One end of the cylindrical chamber 14 is closed by a bottom plate 16. The base of the body 12 also forms the anchoring base of the workpiece gripping device 10 and for this purpose is provided with centering/fixing pins 17a, 17b.

The opposite end of the cylindrical chamber 14 is delimited by a bottom wall 18 obtained monolithically from the body 12.

A piston 19 is slidingly accommodated in the cylindrical chamber 14. The piston 19 is provided with a stem 20 that passes slidingly and so as to provide a pneumatic seal through a hole 22 formed in the bottom wall 18. A transmission element constituted by a sleeve 26 is fixed at the top of the stem 20, outside the cylindrical chamber 14.

The sleeve 26 has two mirror-symmetrical oblique guides 28, 30 on respective opposite sides, which converge away from the piston 19.

The workpiece gripping device 10, in this embodiment, is provided with two claws 32, 34 on which respective grip elements (not shown), shaped according to the piece to be gripped, can be fixed.

The two claws 32, 34 are received slidingly in corresponding rectilinear guides 36, 38 of the body 12 in order to translate in a direction at right angles to the axis of the piston 19 between a loading/unloading position and a gripping position.

The two claws 32, 34 have respective oblique complementary guides 40, 42 that engage slidingly the two oblique guides 28, 30 of the sleeve 26, thus causing the opening and closing of the claws 32, 34 in relation to the axial movements of the piston 19.

The piston 19 is biased elastically in the closing direction of the claws 32, 34 by a series of external preloaded springs 44a and internal preloaded springs 44b inserted one inside the other. The springs are functionally interposed between the piston 19 and the body 12.

The piston 19 can be actuated to open by feeding pressurized air in the bottom plate side region 14a of the cylindrical chamber 14.

The workpiece gripping device according to the invention is provided with valve means 50 which allow to connect selectively, and temporarily, the stem side region 14a or the bottom plate side region 14a of the cylindrical chamber 14 to a pressurized air source, for example an ordinary gun compressor, in order to increase the closing force of the claws 32, 34 or actuate their opening. Moreover, as will be seen in greater detail hereinafter, the valve means 50 are configured to keep the claws 32, 34 in their gripping position, with increased gripping force, or in their loading/unloading position, even after the pressurized air source is disconnected.

In this embodiment, the valve means 50 form a separate element applied to the external wall of the body 12.

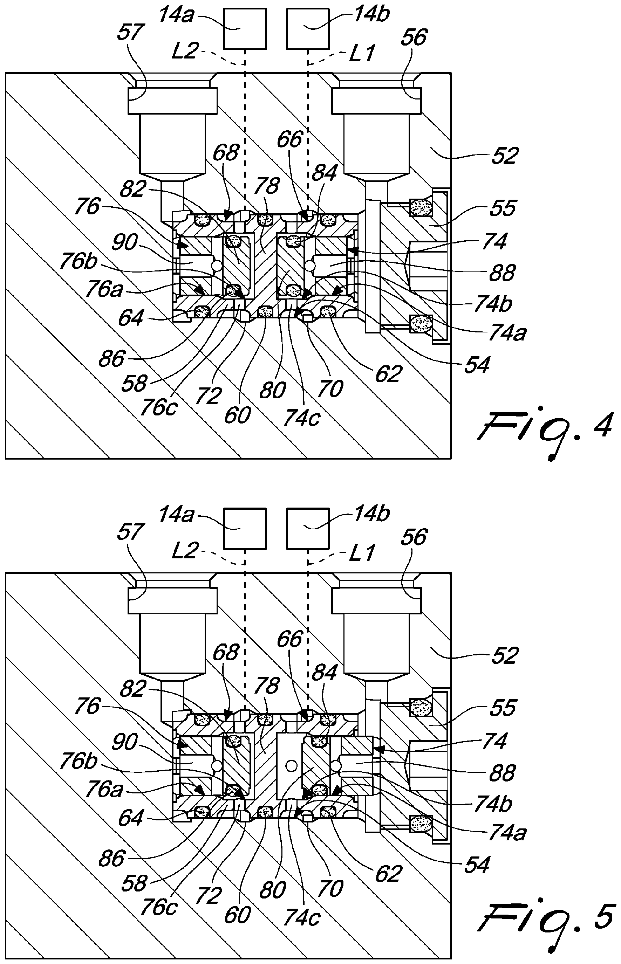

With particular reference to Figures 4-7, the valve means 50 comprise a support 52, in which a blind cylindrical seat 54 closed by a lid 55 is formed.

The end of the blind cylindrical seat 54 on the side of the lid 55 is connected to a first port 56, which is shaped so as to interface with the pressurized air source. The bottom end of the blind cylindrical seat 54 is connected to a second port 57, which is identical to the first port 56.

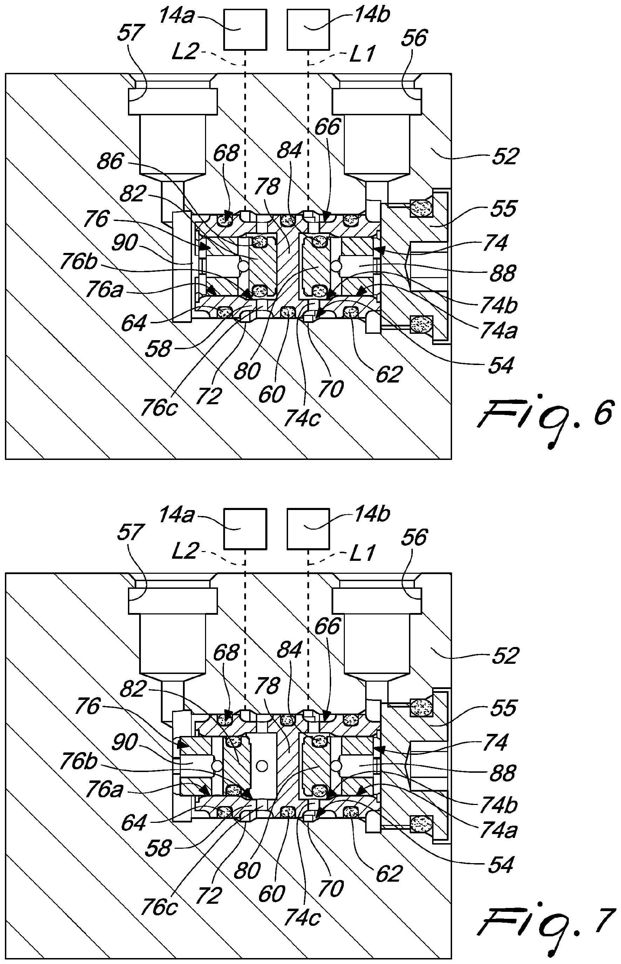

The valve means 50 are configured to:
- connect the first port 56 to a first circuit L1 (shown only schematically in Figures 4-7) connected to the stem side region 14b of the cylindrical chamber 14, and the second port 57 with a second circuit L2 (shown only schematically in Figures 4-7) connected to the bottom plate region 14a of the cylindrical chamber 14, when the pressurized air source is connected to the first port 56 and the second port 57 is put to discharge (Figure 4),
- seal the first circuit L1 when it is pressurized and the pressurized air source is disconnected from the first port 56 (Figure 5),
- connect the second circuit L2 to the second port 57 and the first circuit L1 to the first port 56, when the pressurized air source is connected to the second port 57 and the first port 56 is put to discharge (Figure 6),
- seal the second circuit L2 when it is pressurized and the pressurized air source is disconnected from the second port 57 (Figure 7).

In greater detail, a slider 58 is received slidingly in the cylindrical seat 54.

The slider 58 is provided with a central annular gasket 60 and with two end annular gaskets 62, 64 which engage hermetically the blind cylindrical seat 54.

Between the central annular gasket 60 and the two end annular gaskets 62, 64 there are two sealed annular portions 66, 68. The two sealed annular portions 66, 68 are always in fluid communication with respective two internal grooves 70, 72 of the blind cylindrical seat 54, regardless of the position of the slider 58.

A first internal groove 70, which is closer to the lid 55, is in communication with the first circuit L1. The other internal groove 72, which is closer to the bottom of the blind cylindrical seat 54, is in communication with the second circuit L2.

The slider 58 has two axial seats 74, 76 at its opposite ends, which are separated by a partition 78.

Each one of the axial seats 74, 76 has a narrower external cylindrical portion 74a, 76a and a wider internal cylindrical portion 74b, 76b.

The internal cylindrical portions 74b, 76b have respective radial holes 74c, 76c that lead into the sealed annular portions 66, 68 of the slider 58.

The axial seats 74, 76 accommodate slidingly respective flow control elements 80, 82.

The flow control elements 80, 82 are provided with respective annular gaskets 84, 86 proximate to their internal ends. With the flow control elements in the outermost position, the annular gaskets 84, 86 engage hermetically the external cylindrical portions 74a, 76a of the axial seats 74, 76.

Each one of the flow control elements 80, 82 has respective passages 88, 90 that extend from its external end to its lateral surface upstream of the corresponding annular gasket 84, 86.

The valve means 50 are provided with a closure 99 that can be coupled in the ports 56, 57 in order to protect the pneumatic circuit from dust and other contaminants.

During operation, as already mentioned, the claws 32, 34 are normally biased for closing by the springs 44.

In order to increase the gripping force, compressed air is fed in the first port 56 by means of the pressurized air source.

As a result of the pressure, the slider 58 abuts against the bottom of the blind cylindrical seat 54; the flow control element 82 on the side of the lid 55 translates in the same direction and abuts against the partition 78 (Figure 4).

At this point, the stem side region 14b of the cylindrical chamber 14 receives pressurized air through the passages 88, the internal cylindrical portion 74b of the axial seat 74, the radial holes 74c, the sealed annular portion 66, the internal circumferential groove 70, and the first circuit L1.

Once the desired gripping force has been reached, the pressurized air source is disconnected from the port 56.

At this point, the pressure in the stem side region 14b of the cylindrical chamber 14, following the opposite path with respect to the one indicated above, pushes the flow control element 80 into abutment against the lid 55. In this manner, the first circuit L1 remains sealed by engagement of the annular gasket 84 of the flow control element 80 with the external cylindrical portion 74a of the axial seat 74 (Figure 5).

During the injection of pressurized air in the stem side region 14b of the cylindrical chamber 14, the bottom plate side region 14a of the cylindrical chamber 14 is put to discharge through the second circuit L2, the sealed annular portion 68, the internal circumferential groove 72, the radial holes 76c, the internal cylindrical portion 76b of the axial seat 76, the passages 90, and the second port 57.

The first circuit L1 thus sealed is capable of maintaining stably the pressure in the stem side region 14b of the cylindrical chamber 14 even when the pressurized air source is disconnected, without any decrease in the gripping force.

Furthermore, by virtue of presence of the springs and of the frictions between the inclined planes, an accidental pressure drop can cause at most a drop in the additional gripping force obtained by pneumatic means, but not its decrease to zero. This drop is more or less mild according to the inclination of the oblique guides 28, 30 of the sleeve 26 and of the oblique complementary guides 40, 42 of the claws 32, 34.

Indeed, it has been found in practice that in the event of relatively high inclinations (i.e., very short strokes of the claws 32, 34), the additional gripping force remains stable, i.e., it does not decrease.

In order to reopen the claws 32, 34, compressed air is fed into the second port 57.

The pressure pushes the slider 58 into abutment against the lid 55 and the flow control element 82 into abutment against the partition 78 (Figure 6).

At this point, the bottom plate side region 14a of the cylindrical chamber 14 receives pressurized air through the passages 90, the internal cylindrical portion 76b of the axial seat 76, the radial holes 76c, the sealed annular portion 68, the internal circumferential groove 72 , and the second circuit L2.

In this step, the stem side region 14b of the cylindrical chamber 14 is put to discharge through the first circuit L1, the sealed annular portion 66, the internal circumferential groove 70, the radial holes 74c, the internal cylindrical portion 74b of the axial seat 74, the passages 88, and the first port 56.

Once the claws 32, 34 have been opened, the pressurized air source is disconnected from the port 57.

At this point, the pressure in the bottom plate side region 14a of the cylindrical chamber 14, following the opposite path to the one mentioned above, pushes the flow control element 82 into abutment against the bottom of the blind cylindrical seat 54 (Figure 7). In this manner, the second circuit L2 remains sealed by engagement of the annular gasket 86 of the flow control element 82 with the external cylindrical portion 76a of the axial seat 76.

In this case also, the second circuit L2 thus sealed is capable of maintaining stably the pressure in the bottom plate side region 14a of the cylindrical chamber 14 even when the pressurized air source is disconnected, with the claws 32, 34 remaining completely open for workpiece replacement.

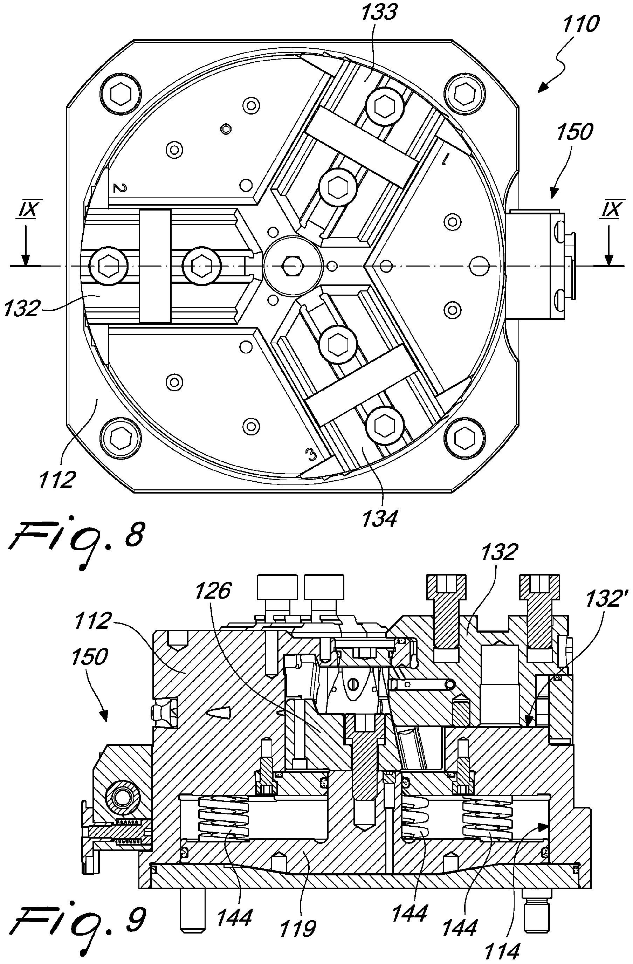

Figures 8 and 9 describe an alternative embodiment of the invention, in which the components similar to the previous embodiment are designated by the same reference numerals increased by 100.

This embodiment differs from the preceding one in that the valve means 150 are applied to a workpiece gripping device 110 provided with three claws 132, 133, 134.

The claws 132, 133, 134 are received slidingly in respective guide seats such as 132' (Figure 9) formed in the body 112 of the workpiece gripping device.

In a manner similar to the preceding embodiment, the claws 132, 133, 134 open and close in relation to the axial translation of a sleeve 126, by sliding engagement between respective inclined planes. The translation of the sleeve 126 is actuated by a pneumatic piston 119 accommodated in a cylindrical chamber 114 formed in the body 112.

As in the previous embodiment, the piston 119 is biased elastically in the closing direction of the claws 132, 133, 134 by a series of preloaded springs 144 functionally interposed between the piston 119 and the body 112, and can be actuated to open by supplying pressurized air in the bottom plate side region of the cylindrical chamber 114.

The valve means 150 and their operation are completely similar to what has been described in the previous embodiment and therefore their description will not be repeated.

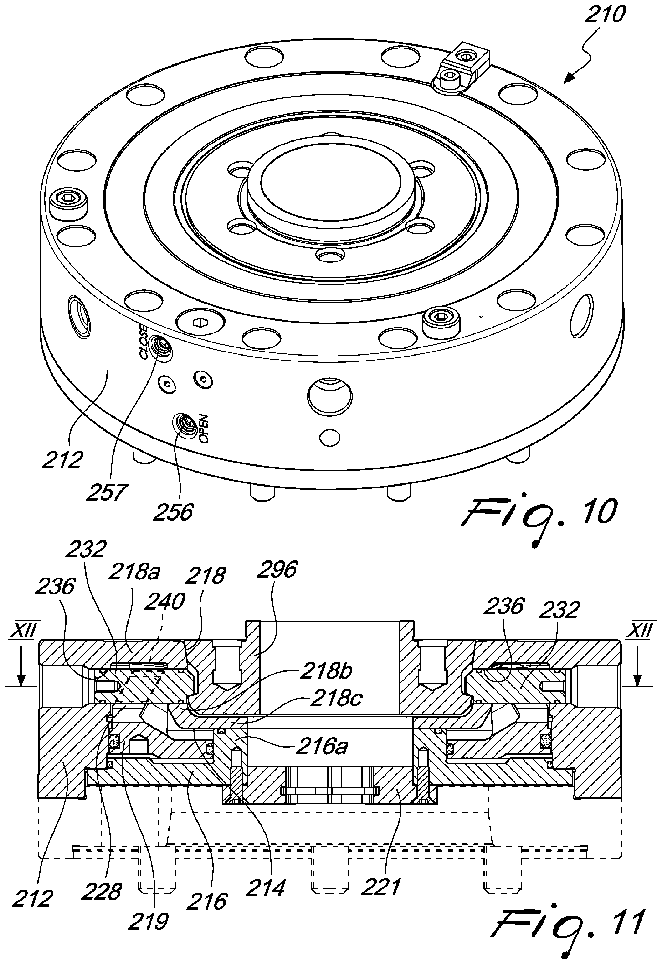

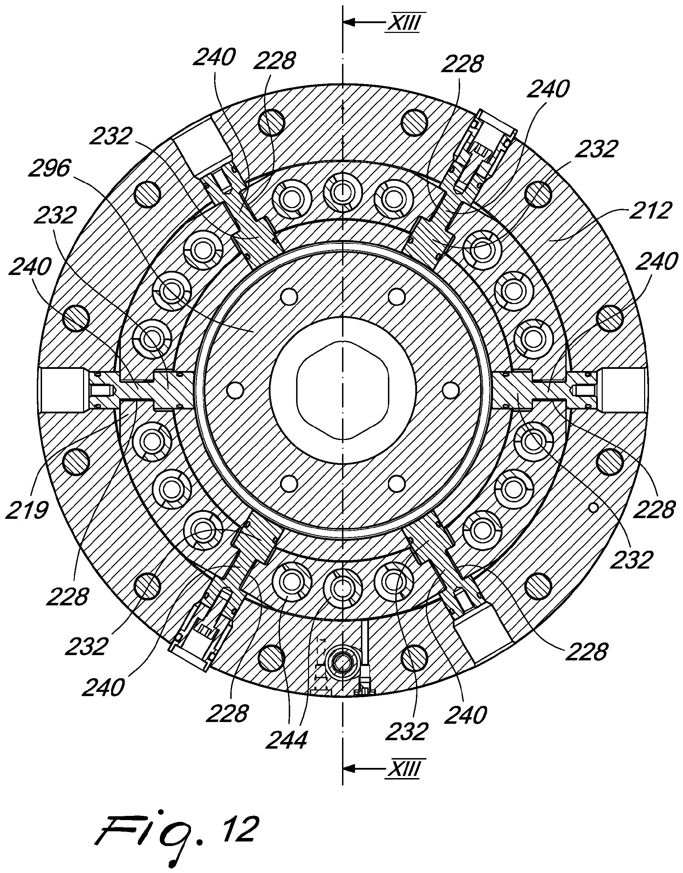

Figures 10-14 describe a further embodiment of the invention, in which the components similar to the previous embodiment are designated by the same reference numerals increased by 200.

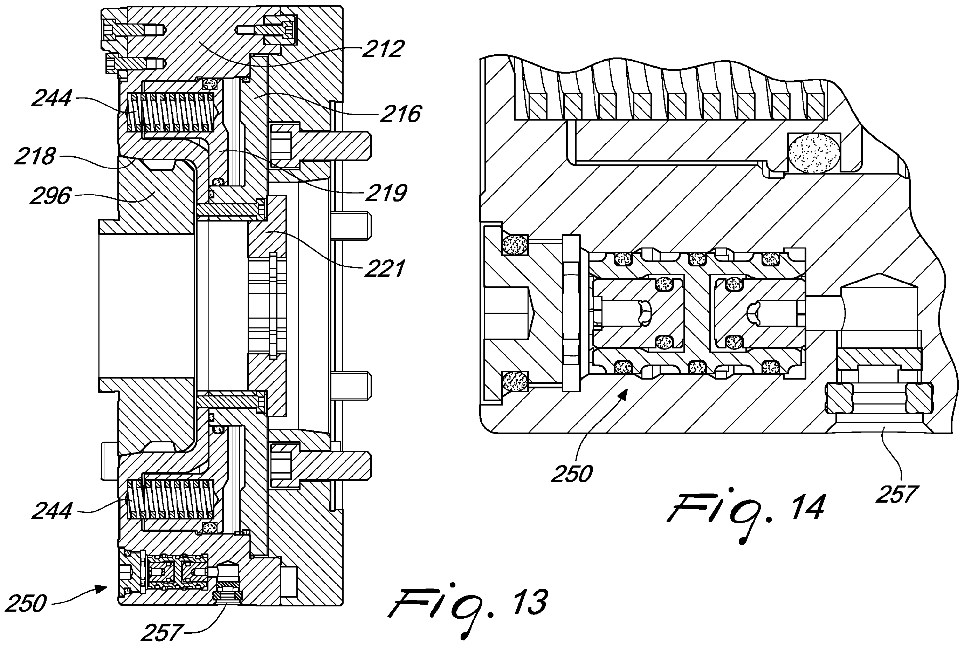

This embodiment differs from the preceding ones in that the valve means 250 (Figures 13 and 14) are integrated in a workpiece gripping device 210 of a different type, particularly of the "positioner" type. In this type of device the workpiece is not gripped directly, but a locking pin 296 (Figure 11) is gripped which in turn can be fixed, for example, to a workpiece holder plate (not shown).

The workpiece gripping device 210 according to this embodiment of the invention comprises a body 212, in which an airtight annular chamber 214 is formed (Figure 11).

One axial end of the annular chamber 214 is delimited by an annular bottom plate 216. The annular bottom plate 216 has a hollow cylindrical tab 216a that rises axially from its internal diameter toward the inside of the annular chamber 214. An annular flange 221 is applied outside the annular bottom plate.

The opposite axial end of the annular chamber 214 is delimited by a bottom wall 218 obtained monolithically from the body 212. The bottom wall 218 has an outermost annular portion 218a that extends on a plane at right angles to the axis of the annular chamber 214, an intermediate cylindrical portion 218b that extends axially toward the annular bottom plate 216, and an innermost annular portion 218c which is parallel to the outermost annular portion 118a, which engages hermetically the end of the hollow cylindrical tab 216a of the bottom plate 216.

The base of the body 212 also defines the anchoring base of the workpiece gripping device 210 and, for this purpose, is provided with centering/fixing pins 217a, 217b.

An annular piston 219 is slidingly accommodated in the annular chamber 214 and engages hermetically the external wall of the annular chamber 214 with its outside diameter and the hollow cylindrical tab 216a with its inside diameter.

The annular piston 219 is provided with six oblique guides 228 that converge away from the annular bottom plate 216.

The workpiece gripping device 210, in this embodiment, is provided with six locking inserts 232.

The locking inserts 232 are received slidingly in respective guiding seats 236 formed in the body 12, which extend in a direction at right angles to the axis of the piston 219.

The locking inserts 232 have respective oblique complementary guides 240 that engage slidingly the two oblique guides 228 of the annular piston 219.

Therefore, the annular piston 219 acts as an actuation element in a manner similar to the sleeve of the first two described embodiments.

The annular piston 219 is biased elastically in the closing direction of the locking inserts 232 by a series of preloaded springs 244 interposed functionally between the annular piston 219 and the body 212, and can be actuated to open by supplying pressurized air in the bottom plate side region of the annular chamber 214.

In this embodiment, as highlighted in Figures 13 and 14, the valve means 250 are integrated in the body 212, so that the two ports 256, 257 for injecting pressurized air are formed directly in the body 212 (Figure 10).

Apart from this, the valve means 250 and their operation are completely similar to what has been described in the previous embodiments and therefore their description will not be repeated.

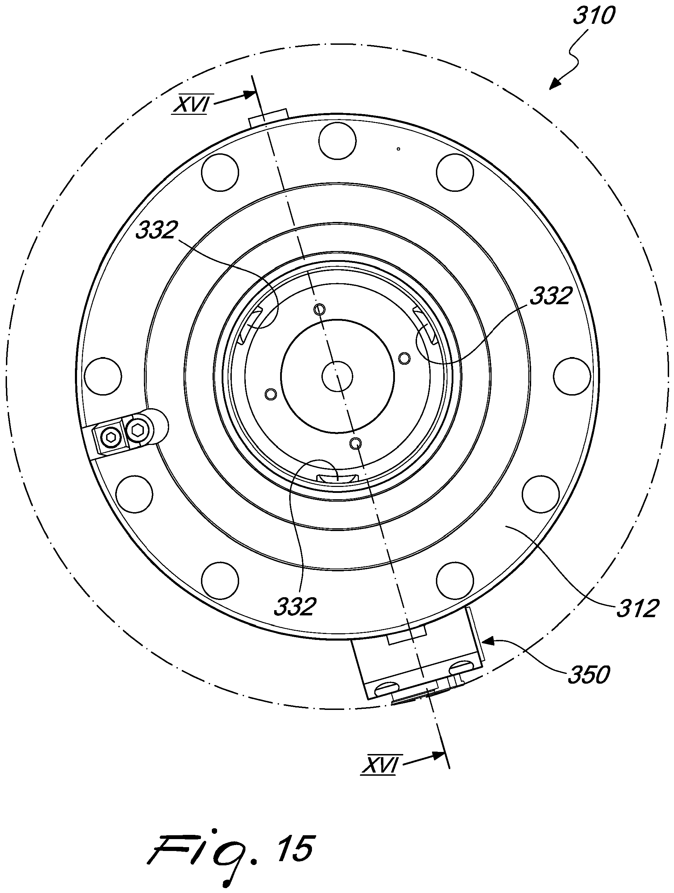

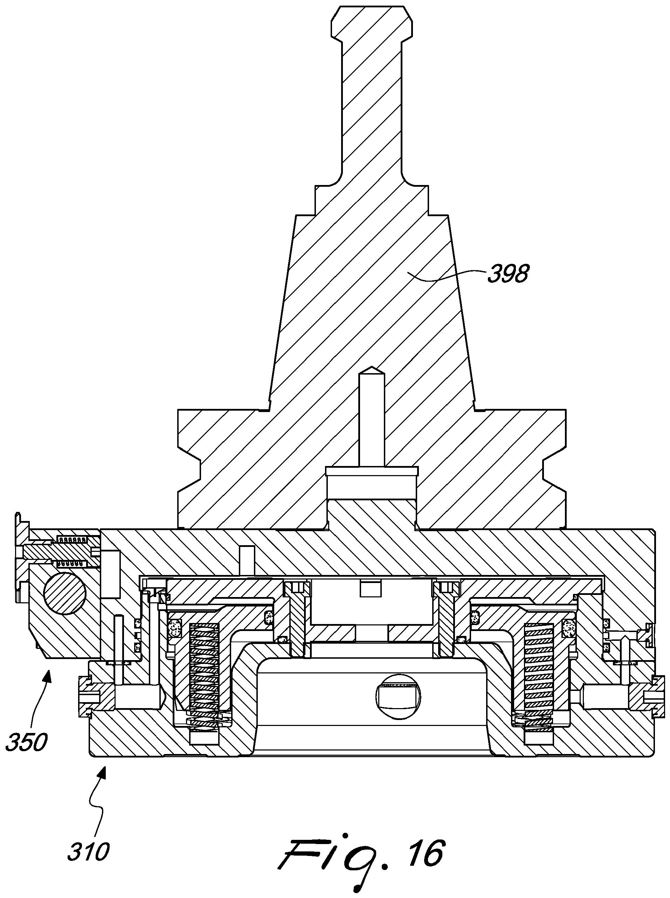

Figures 15, 16 describe a further embodiment of the invention, in which the components similar to the previous embodiment are designated by the same reference numerals increased by 300.

This embodiment differs from the previous one in that the workpiece gripping device 310, again of the "positioner" type, is provided with three locking inserts 332 instead of six, and the valve means 350, instead of being integrated in the body 312, are a separate element in a manner similar to the first two described embodiments.

The workpiece gripping device 310 is shown coupled to a pallet 398 for mounting on a generic machining center (not shown).

In this embodiment also, the valve means 350 and their operation are fully analogous to what has been described in the previous embodiments and, therefore, their description will not be repeated.

Some preferred embodiments of the invention have been described herein, but the person skilled in the art will naturally be able to make various modifications and variations within the scope of the appended claims.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A workpiece gripping device for machine tools and machining centers, comprising
a body (12),
grip means (32, 34), which can move with respect to the body (12) between a loading/unloading position and a gripping position,
elastic means (44) arranged to bias said grip means (32, 34) towards said gripping position,
pneumatic actuation means (19), which can be activated to actuate selectively said grip means (32, 34) either toward said gripping position in aid of said elastic means (44), or toward said loading/unloading position in contrast with said elastic means (44), by means of a first circuit (L1) and a second circuit (L2) respectively, wherein said first circuit (L1) and said second circuit (L2) are configured to be selectively supplied with pressurized air,
**characterized in that** it comprises valve means (50) provided with a first port (56) and with a second port (57), which can be connected selectively and temporarily to a pressurized air source (P) and are connected respectively to said first circuit (L1) and to said second circuit (L2) via flow control means (58, 80, 82) wherein said flow control means (58, 80, 82) are movable as a consequence of the air pressure supplied through said first port (56) or said second port (57), so as to
connect said first port (56) to said first circuit (L1) and said second port (57) to said second circuit (L2), when said pressurized air source (P) is connected to said first port (56) and said second port (57) is put to discharge,
seal said first circuit (L1) when it is pressurized and the pressurized air source (P) is disconnected from said first port (56), so as to maintain said grip means (32, 34) in said gripping position when disconnected from said pressurized air source (P),
connect said second port (57) to said second circuit (L2) and said first port (56) to said first circuit (L1), when the pressurized air source is connected to said second port (57) and said first port (56) is put to discharge,
seal said second circuit (L2) when it is pressurized and the pressurized air source (P) is disconnected from said second portion (57) so as to maintain said grip means (32, 34) in said loading/unloading position when disconnected from said pressurized air source (P).

2. The workpiece gripping device according to claim 1, **characterized in that** said valve means comprise a slider (58) which is accommodated slidingly in a cylindrical seat (54) which has a first end connected to said first port (56), a second end connected to said second port (57), a first internal groove (70) connected to said first circuit (L1), and a second internal groove (72) connected to said second circuit (L2), said slider (58) having
- a first sealed annular portion (66) which opens onto said first internal groove (70),
- a second sealed annular portion (68) which opens onto said second internal groove (72),
- two axial seats (74, 76) which are separated by a partition (78) at its respective opposite ends, a first one of which is connected to said first sealed annular portion (66) and a second one of which is connected to said second sealed annular portion (68), which axial seats (74, 76) accommodate slidingly respective flow control elements (80, 82) configured to open/block the passage of air between said first port (56) and said first circuit (L1) and between said second port (57) and said second circuit (L2) in relation to the difference in pressure between their opposite ends.

3. The workpiece gripping device according to claim 2, **characterized in that** each one of said axial seats (74, 76) has a narrower external cylindrical portion (74a, 76a) and a wider internal cylindrical portion (74b, 76b) which is connected to a respective one of said first and second sealed annular portions (66, 68), and each one of said flow control elements is provided with a respective annular gasket (84, 86), which is adapted to engage hermetically said external cylindrical portions (74a, 76a) when it is in the outermost position, as well as with passages (88, 90) which extend from its external end to its lateral surface upstream of the respective annular gasket (84, 86).

4. The workpiece gripping device according to one of claims 1-3, **characterized in that** said valve means (50) form a separate element which is applied to the external wall of said body (12).

5. The workpiece gripping device according to one of claims 1-3, **characterized in that** said valve means (50) are integrated in said body (12).

6. The workpiece gripping device according to one of claims 1-5, **characterized in that** said grip means comprise at least one pair of claws (32, 34, 132, 133, 134) which are actuated for opening/closing by a sleeve (26, 126) by sliding engagement between respective inclined planes.

7. The workpiece gripping device according to one of claims 1-5, **characterized in that** it is of the positioner type, in which said grip means comprise at least two locking inserts (232, 332) which are driven for opening/closing by an actuation element (26, 126) by sliding engagement between respective inclined planes.

## Patentansprüche

1. Eine Werkstückgreifvorrichtung für Werkzeugmaschinen und Bearbeitungszentren, die Folgendes umfasst:
einen Körper (12),
Greifmittel (32, 34), die sich mit Bezug auf den Körper (12) zwischen einer Lade-/Entladeposition und einer Greifposition bewegen können,
elastische Mittel (44), angeordnet, um die Greifmittel (32, 34) in die Greifposition vorzuspannen,
pneumatische Antriebsmittel (19), die aktiviert werden können, um die Greifmittel (32, 34) mit Hilfe eines ersten Kreislaufs (L1) beziehungsweise eines zweiten Kreislaufs (L2) wahlweise entweder mit Hilfe der elastischen Mittel (44) in die Greifposition oder im Kontrast zu den elastischen Mitteln (44) in die Lade-/Entladeposition zu bewegen, wobei der erste Kreislauf (L1) und der zweite Kreislauf (L2) ausgebildet sind, um wahlweise mit Druckluft versorgt zu werden,
**dadurch gekennzeichnet, dass** sie Ventilmittel (50) umfasst, ausgestattet mit einem ersten Anschluss (56) und mit einem zweiten Anschluss (57), die wahlweise und vorübergehend an eine Druckluftquelle (P) angeschlossen werden können und mit dem ersten Kreislauf (L1) beziehungsweise mit dem zweiten Kreislauf (L2) über Durchflussregelungsmittel (58, 80, 82) verbunden sind, wobei die Durchflussregelungsmittel (58, 80, 82) infolge des Luftdrucks beweglich sind, der durch die erste Öffnung (56) oder die zweite Öffnung (57) zugeführt wird, um
den ersten Anschluss (56) mit dem ersten Kreislauf (L1) und den zweiten Anschluss (57) mit dem zweiten Kreislauf (L2) zu verbinden, wenn die Druckluftquelle (P) an den ersten Anschluss (56) angeschlossen ist und der zweite Anschluss (57) zum Ablassen gebracht wird,
den ersten Kreislauf (L1) abzudichten, wenn er mit Druck beaufschlagt ist und die Druckluftquelle (P) von dem ersten Anschluss (56) getrennt ist, um die Greifmittel (32, 34) bei Trennung von der Druckluftquelle (P) in der Greifposition zu halten,
den zweiten Anschluss (57) mit dem zweiten Kreislauf (L2) und den ersten Anschluss (56) mit dem ersten Kreislauf (L1) zu verbinden, wenn die Druckluftquelle an den zweiten Anschluss (57) angeschlossen ist und der erste Anschluss (56) zum Ablassen gebracht wird,
den zweiten Kreislauf (L2) abzudichten, wenn er mit Druck beaufschlagt ist und die Druckluftquelle (P) von dem zweiten Anschluss (57) getrennt ist, um die Greifmittel (32, 34) bei Trennung von der Druckluftquelle (P) in der Lade-/Entladeposition zu halten.

2. Die Werkstückgreifvorrichtung gemäß Anspruch 1, **dadurch gekennzeichnet, dass** die Ventilmittel einen Schieber (58) umfassen, der gleitend in einem zylindrischen Sitz (54) untergebracht ist, welcher ein erstes Ende hat, das an den ersten Anschluss (56) angeschlossen ist, ein zweites Ende, das an den zweiten Anschluss (57) angeschlossen ist, eine erste innere Nut (70), die mit dem ersten Kreislauf (L1) verbunden ist, und eine zweite innere Nut (72), die mit dem zweiten Kreislauf (L2) verbunden ist, wobei der Schieber (58) Folgendes hat:
- einen ersten abgedichteten ringförmigen Abschnitt (66), der sich zu der ersten inneren Nut (70) hin öffnet,
- einen zweiten abgedichteten ringförmigen Abschnitt (68), der sich zu der zweiten inneren Nut (72) hin öffnet,
- zwei axiale Sitze (74, 76), die durch eine Trennwand (78) getrennt sind, an ihren jeweiligen gegenüberliegenden Enden, von denen ein erster mit dem ersten abgedichteten ringförmigen Abschnitt (66) verbunden ist und von denen ein zweiter mit dem zweiten abgedichteten ringförmigen Abschnitt (68) verbunden ist; wobei die axialen Sitze (74, 76) entsprechende Durchflussregelelemente (80, 82) gleitend aufnehmen, die ausgebildet sind, um den Durchfluss von Luft zwischen dem ersten Anschluss (56) und dem ersten Kreislauf (L1) und zwischen dem zweiten Anschluss (57) und dem zweiten Kreislauf (L2) in Bezug auf den Druckunterschied zwischen ihren gegenüberliegenden Enden zu öffnen/zu blockieren.

3. Die Werkstückgreifvorrichtung gemäß Anspruch 2, **dadurch gekennzeichnet, dass** jeder der axialen Sitze (74, 76) einen schmaleren äußeren zylindrischen Abschnitt (74a, 76a) und einen breiteren inneren zylindrischen Abschnitt (74b, 76b) hat, welcher mit einem entsprechenden der ersten und zweiten abgedichteten ringförmigen Abschnitte (66, 68) verbunden ist, und jedes der Durchflussregelelemente mit einem dazugehörigen Dichtring (84, 86) ausgestattet ist, der ausgebildet ist, um in hermetischem Eingriff mit den äußeren zylindrischen Abschnitten (74a, 76a) zu stehen, wenn er sich in der äußersten Position befindet, sowie mit Durchlässen (88, 90), die sich von seinem äußeren Ende zu seiner Seitenfläche stromaufwärts von dem entsprechenden Dichtring (84, 86) erstrecken.

4. Die Werkstückgreifvorrichtung gemäß einem der Ansprüche 1-3, **dadurch gekennzeichnet, dass** die Ventilmittel (50) ein separates Element bilden, das an der Außenwand des Körpers (12) angebracht ist.

5. Die Werkstückgreifvorrichtung gemäß einem der Ansprüche 1-3, **dadurch gekennzeichnet, dass** die Ventilmittel (50) in den Körper (12) integriert sind.

6. Die Werkstückgreifvorrichtung gemäß einem der Ansprüche 1-5, **dadurch gekennzeichnet, dass** die Greifmittel mindestens ein Paar von Klauen (32, 34, 132, 133, 134) umfassen, die zum Öffnen/Schließen von einer Hülse (26, 126) durch gleitenden Eingriff zwischen entsprechenden schiefen Ebenen angetrieben sind.

7. Die Werkstückgreifvorrichtung gemäß einem der Ansprüche 1-5, **dadurch gekennzeichnet, dass** sie vom Positioniervorrichtungs-Typ ist, worin die Greifmittel mindestens zwei Blockiereinsätze (232, 332) umfassen, welche zum Öffnen/Schließen von einem Antriebselement (26, 126) durch gleitenden Eingriff zwischen entsprechenden schiefen Ebenen angetrieben sind.

## Revendications

1. Dispositif de préhension de pièce pour des machines-outils et des centres d'usinage, comportant :
un corps (12),
des moyens de préhension (32, 34), qui peuvent se déplacer par rapport au corps (12) entre une position de chargement/déchargement et une position de saisie,
des moyens élastiques (44) agencés pour rappeler lesdits moyens de préhension (32, 34) vers ladite position de préhension,
des moyens d'actionnement pneumatiques (19), qui peuvent être activés pour actionner sélectivement lesdits moyens de préhension (32, 34) soit vers ladite position de préhension à l'aide desdits moyens élastiques (44), soit vers ladite position de chargement/déchargement en opposition auxdits moyens élastiques (44), au moyen d'un premier circuit (L1) et d'un second circuit (L2) respectivement, dans lequel ledit premier circuit (L1) et ledit second circuit (L2) sont configurés pour être sélectivement alimentés en air mis sous pression,
**caractérisé en ce qu'**il comporte des moyens de soupape (50) pourvus d'un premier orifice (56) et d'un second orifice (57), qui peuvent être reliés de manière sélective et temporaire à une source d'air mis sous pression (P) et sont respectivement reliés audit premier circuit (L1) et audit second circuit (L2) via des moyens de commande d'écoulement (58, 80, 82), dans lequel lesdits moyens de commande d'écoulement (58, 80, 82) sont mobiles en conséquence de la pression d'air fournie à travers ledit premier orifice (56) ou ledit second orifice (57), de manière à relier ledit premier orifice (56) audit premier circuit (L1) et ledit second orifice (57) audit second circuit (L2), lorsque ladite source d'air mis sous pression (P) est reliée audit premier orifice (56) et que ledit second orifice (57) est placé en refoulement,
étanchéifier ledit premier circuit (L1) lorsqu'il est mis sous pression et que la source d'air mis sous pression (P) est séparée dudit premier orifice (56), de manière à maintenir lesdits moyens de préhension (32, 34) dans ladite position de préhension lorsqu'ils sont séparés de ladite source d'air mis sous pression (P),
relier ledit second orifice (57) audit second circuit (L2) et ledit premier orifice (56) audit premier circuit (L1), lorsque la source d'air mis sous pression est reliée audit second orifice (57) et que ledit premier orifice (56) est placé en refoulement,
étanchéifier ledit second circuit (L2) lorsqu'il est mis sous pression et que la source d'air mis sous pression (P) est séparée dudit second orifice (57), de manière à maintenir lesdits moyens de préhension (32, 34) dans ladite position de chargement/déchargement lorsqu'ils sont séparés de ladite source d'air mis sous pression (P).

2. Dispositif de préhension de pièce selon la revendication 1, **caractérisé en ce que** lesdits moyens de soupape comportent un coulisseau (58) qui est reçu de manière coulissante dans un siège cylindrique (54) qui a une première extrémité reliée audit premier orifice (56), une seconde extrémité reliée audit second orifice (57), une première gorge interne (70) reliée audit premier circuit (L1), et une seconde gorge interne (72) reliée audit second circuit (L2), ledit coulisseau (58) ayant :
- une première partie annulaire étanchéifiée (66) qui débouche sur ladite première gorge interne (70),
- une seconde partie annulaire étanchéifiée (68) qui débouche sur ladite seconde gorge interne (72),
- deux sièges axiaux (74, 76) qui sont séparés par une séparation (78) à leurs extrémités opposées respectives, dont une première est reliée à ladite première partie annulaire étanchéifiée (66) et dont une seconde est reliée à ladite seconde partie annulaire étanchéifiée (68), lesquels sièges axiaux (74, 76) reçoivent de manière coulissante des éléments de commande d'écoulement (80, 82) respectifs configurés pour ouvrir/bloquer le passage d'air entre ledit premier orifice (56) et ledit premier circuit (L1) et entre ledit second orifice (57) et ledit second circuit (L2) par rapport à la différence de pression entre leurs extrémités opposées.

3. Dispositif de préhension de pièce selon la revendication 2, **caractérisé en ce que** chacun desdits sièges axiaux (74, 76) a une partie cylindrique externe plus étroite (74a, 76a) et une partie cylindrique interne plus large (74b, 76b) qui est reliée à une partie respective parmi lesdites première et seconde parties annulaires étanchéifiées (66, 68), et chacun desdits éléments de commande d'écoulement est pourvu d'un joint annulaire (84, 86) respectif, qui est adapté pour venir hermétiquement en contact avec lesdites parties cylindriques externes (74a, 76a) lorsqu'il est dans la position la plus à l'extérieur, ainsi que de passages (88, 90) qui s'étendent à partir de son extrémité externe jusqu'à sa surface latérale en amont de la garniture annulaire (84, 86) respective.

4. Dispositif de préhension de pièce selon l'une des revendications 1 à 3, **caractérisé en ce que** lesdits moyens de soupape (50) forment un élément séparé qui est appliqué à la paroi externe dudit corps (12).

5. Dispositif de préhension de pièce selon l'une des revendications 1 à 3, **caractérisé en ce que** lesdits moyens de soupape (50) sont intégrés dans ledit corps (12).

6. Dispositif de préhension de pièce selon l'une des revendications 1 à 5, **caractérisé en ce que** lesdits moyens de préhension comportent au moins une paire de griffes (32, 34, 132, 133, 134) qui sont actionnées en ouverture/fermeture par une douille (26, 126) par engagement coulissant entre des plans inclinés respectifs .

7. Dispositif de préhension de pièce selon l'une des revendications 1 à 5, **caractérisé en ce qu'**il est du type positionneur, dans lequel lesdits moyens de préhension comportent au moins deux inserts de blocage (232, 332) qui sont entraînés en ouverture/fermeture par un élément d'actionnement (26, 126) par engagement coulissant entre des plans inclinés respectifs.
